# EUROPÄISCHE PATENTSCHRIFT

(11) **EP 2 862 222 B1**
(45) Veröffentlichungstag und Bekanntmachung des Hinweises auf die Patenterteilung: **16.11.2016**
(21) Anmeldenummer: 13730465.5
(22) Anmeldetag: 18.04.2013
(51) Int. Cl.: H01M 6/32, F42B 19/24, H01M 6/38, H01M 6/50, F16K 17/40, F42B 19/00, H01M 6/04

(54) **AKTIVIERUNGSEINRICHTUNG FÜR EINE ELEKTRISCHE BATTERIEEINHEIT UND ELEKTRISCHE BATTERIEEINHEIT MIT MINDESTENS EINER AKTIVIERUNGSEINRICHTUNG**
ACTIVATION DEVICE FOR AN ELECTRIC BATTERY UNIT AND ELECTRIC BATTERY UNIT COMPRISING AT LEAST ONE ACTIVATION DEVICE
DISPOSITIF D'ACTIVATION POUR UNE UNITÉ DE BATTERIE ÉLECTRIQUE ET UNITÉ DE BATTERIE ÉLECTRIQUE COMPORTANT AU MOINS UN DISPOSITIF D'ACTIVATION

(30) Priorität: 16.06.2012 DE 102012011986
(43) Veröffentlichungstag der Anmeldung: 22.04.2015
(73) Patentinhaber: ATLAS ELEKTRONIK GmbH, 28309 Bremen (DE)
(72) Erfinder: SLOTTA, Norbert, 21680 Stade (DE); RIEKEN, Volker, 25436 Uetersen (DE)
(86) Internationale Anmeldenummer: PCT/DE2013/100141
(87) Internationale Veröffentlichungsnummer: WO 2013/185750

(56) Entgegenhaltungen:
- DE-A1- 3 712 551
- DE-C2- 19 537 683
- GB-A- 1 169 050
- US-A- 2 798 111
- US-A- 3 236 697

## Beschreibung

Die Erfindung betrifft eine Aktivierungseinrichtung für eine elektrische Batterieeinheit, insbesondere für eine Teilbatterie eines Torpedos, gemäß dem Oberbegriff des Anspruchs 1. Die Erfindung betrifft außerdem eine Batterieeinheit, insbesondere eine Batterieeinheit eines Torpedos, mit einem Batteriezellenblock und mehreren an den Batteriezellenblock angeschlossenen Betriebsstoffbehältern gemäß dem Oberbegriff des Anspruchs 9.

Zur Versorgung eines Torpedos mit elektrischer Energie ist herkömmlich in dem Torpedo eine Batterieeinheit mit einem Batteriezellenblock oder mehrere Teiibatterien angeordnet. Der Batteriezellenbock ist ein Energiespeicher in Farm eines Pakets aus Einzelzellen, dem sogenannten Stack. Der Batteriezellenblock umfasst dabei eine Vielzahl aneinander gereihter Elektrodenscheiben, welche kreisrund ausgestaltet sein können, um die Torpedohülle ausnutzen zu können. Zur Aktivierung der Batterieeinheit wird der Batteriezellenblock mit einem Elektrolyt, meistens einer Lauge, gefüllt. Das Elektrolyt und ggf. weitere Betriebsstoffe wie etwa Kühlmittel, werden in Betriebsstoffbehältern bereit gehalten, welche an den Batteriezellenblock angeschlossen sind.

Zur Aktivierung sind Aktivierungseinrichtungen vorgesehen, welche mit einem Betriebsstoffanschluss an den jeweiligen Betriebsstoffbehälter angeschlossen sind. DE 195 37 683 C2 sieht zum Aktivieren einer elektrischen Batterie, welches durch ein externes Aktivierungssignal veranlasst wird, nach Öffnen eines Absperrventils die Zuführung von Sauerstoff vor, mit dem eine Schneideinheit pneumatisch betätigt wird und Elektrolyt aus einer Elektrolytflasche herausgedrückt wird. Dabei wird der unter Druck stehende Sauerstoff über ein Absperrventil der Schneideinheit zugeführt und ein in der Schneideinheit befindlicher Kolben ausgelöst, welcher wiederum einen Verschluss der Elektrolytflasche durchstößt und somit die Elektrolytflasche öffnet. Der unter dem Druck des Sauerstoffs stehende Elektrolyt wird aus der Elektrolytflasche in die einzelnen Batteriezellen gepresst.

Bei der bekannten Einrichtung wird die beim Betrieb der Batterie entstehende Wärme über Kühleinrichtungen der einzelnen Batteriezellen abgeführt. Das durch die Kühleinrichtungen fließende Kühlmittel wird dabei von einer Pumpe bewegt und in einem Kühlkreislauf einem Wärmetauscher zugeführt, der die Wärme nach Außen an das Seewasser abgibt.

Bei der Aktivierung der Batterie muss die kontrollierte Zuführung der Betriebsmittel auch nach längerer Lagerzeit gewährleistet sein. Fehlfunktionen von Bauteilen, welche an der Zuführung von Betriebsstoffen beteiligt sind, können zu einem unkontrollierten Betrieb der Batterie führen. Bspw. führt die Aktivierung der Batterie durch die Zuführung eines Elektrolyten in den Batteriezellenblock zu einer Erwärmung, was bei einer Fehlfunktion bzw. der Kühlung oder anderer Betriebsstoffe zu einer übermäßigen Erwärmung des Batteriezellenblocks und ggf. zu einem Batteriebrand führen kann.

US 2,798,111 offenbart eine Flüssigkeitszufuhrvorrichtung zum Aktivieren einer Trockenbatterie, bei welcher durch Zufuhr eines Fluides unter Druck ein Elektrolyt und eine Schneide gegen eine Membran gedrückt werden, wobei die Schneide die Membran durchschneidet, wodurch der Elektrolyt in die Elektrodenkammer fließen kann und die Batterie aktiviert.

Der vorliegenden Erfindung liegt das Problem zugrunde, eine Aktivierungseinrichtung für eine Batterieeinheit, insbesondere eine Batterieeinheit eines Torpedos, sowie eine Batterieeinheit zu schaffen, welche eine gefahrlose, betriebsbereite Lagerung und eine gefahrlose Aktivierung der Batterieeinheit gewährleisten.

Das Problem wird erfindungsgemäß durch eine Aktivierungseinrichtung mit den Merkmalen des Anspruchs 1 gelöst. Das Problem wird außerdem durch eine Batterieeinheit mit solchen Aktivierungsvorrichtungen gemäß Anspruch 8 gelöst.

Eine Aktivierungseinrichtung für eine elektrische Batterieeinheit umfasst einen Betriebsstoffanschluss, an den ein Betriebsstoffbehälter anschließbar ist. In dem Betriebsstoffbehälter ist ein Betriebsstoff für die elektrische Batterie bereitgehalten. Die Aktivierungseinrichtung umfasst außerdem ein Verschlusselement, welches den Betriebsstoffanschluss beherrscht, wobei die Aktivierungseinrichtung mit dem Verschlusselement an dem Betriebsstoffbehälter angebracht wird, um den Betriebsstoff einzuschließen und für die Aktivierung der elektrischen Batterieeinheit bereitzuhalten.

Die Aktivierungseinrichtung umfasst ferner ein beweglich angeordnetes Schneidelement, welches über einen Pneumatikanschluss mittels eines Betätigungselements betätigbar ist, wobei das Verschlusselement im Arbeitsweg des Schneidelements angeordnet ist. Wird das Betätigungselement der Aktivierungseinrichtung pneumatisch betätigt, so wird das Schneidelement der Aktivierungseinrichtung bewegt und zerschneidet das in seinem Arbeitsweg angeordnete Verschlusselement, sodass der Betriebsstoffanschluss freigegeben ist. Auf diese Weise kann der bis dahin eingeschlossene Betriebsstoff aus dem geöffneten Betriebsstoffbehälter abgeführt werden.

Erfindungsgemäß umfasst die Aktivierungseinrichtung einen Pneumatikausgang, welcher in Abhängigkeit von der Stellung des Betätigungselements mit dem Pneumatikanschluss der Aktivierungseinrichtung fluidisch verbindbar ist. Auf diese Weise wird der Aktivierungsdruck, mit dem das Betätigungselement der Aktivierungseinrichtung pneumatisch betätigt wird und das Schneidelement auslöst, zum Pneumatikanschluss durchgestaltet, wodurch eine Reihenschaltung von Aktivierungseinrichtungen möglich ist. Erfindungsgemäß sind in einer Batterieeinheit die Aktivierungseinrichtungen mehrerer Betriebsstoffbehälter pneumatisch in einer Reihenschaltung geschaltet, wodurch die Betriebsmittel nacheinander zum Batteriezellenblock gelangen. Dabei ist durch die Reihenschaltung der Betriebsstoffbehälter sichergestellt, dass ein Betriebsstoffbehälter jeweils nur dann geöffnet wird, wenn ein in der Reihenschaltung vor ihm angeordneter Betriebsstoffbehälter bereits geöffnet ist. Ohne die Öffnung eines Betriebsstoffbehälters ist die pneumatische Betätigung eines in der Reihenschaltung nachfolgenden Betriebstoffbehälters bzw. dessen Aktivierungseinrichtung ausgeschlossen, wodurch die Gefahr eines unkontrollierten Betriebs der Batterieeinheit aufgrund von Fehlfunktionen einzelner Aktivierungseinrichtungen deutlich reduziert ist.
Die pneumatische Betätigung der Aktivierungseinheit erfolgt über einen Druckspeicher, dem eine betätigbare Verschlussvorrichtung zugeordnet ist. In dem Druckspeicher ist ein unter statischem Druck stehendes Arbeitsgas, bspw. Stickstoff, bereitgestellt. Bei Betätigung der Verschlussvorrichtung wird der Druckspeicher geöffnet und der Arbeitsdruck zur Ersten der in Reihe geschalteten Aktivierungseinrichtungen durchgeschaltet.

In der Reihenschaltung der jeweiligen Aktivierungseinrichtungen einer Batterieeinheit ist in einer vorteilhaften Ausführungsform ein Betriebstoffbehälter, der Elektrolyt für den Batteriezellenblock enthält, hinter einem Betriebsstoffbehälter eines Kühlmittelkreises der Batterieeinheit angeordnet. Dadurch ist sichergestellt, dass erst zu einem Zeitpunkt Elektrolyt zum Batteriezellenblock gelangen kann und damit die Batterie aktiviert, wenn der Betriebsstoffbehälter mit dem Kühlmittel bereits geöffnet ist und sichergestellt ist, dass der Kühlmittelkreis der Batterieeinheit betriebsbereit ist.

Die pneumatische Reihenschaltung mehrer Aktivierungseinrichtungen ist in einer vorteilhaften Ausführungsform durch eine derartige Konfiguration der Anordnung von Betätigungselement und Pneumatikausgang der Aktivierungseinrichtung gegeben, dass der Pneumatikausgang in einer Stellung des Betätigungselements, welche im Arbeitsweg des Schneidelements nach dem Passieren des Verschlusselements liegt, mit dem Pneumatikausgang fluidisch verbunden ist. Das Schneidelement passiert auf seinem Arbeitsweg zunächst das Verschlusselement und schneidet das Verschlusselement auf, sodass der Betriebsstoffbehälter geöffnet wird. Das Betätigungselement, welches zur Betätigung des Schneidelements kinematisch mit dem Schneidelement gekoppelt ist, gibt durch die erfindungsgemäße Konfiguration der Anordnung von Betätigungselement und Pneumatikausgang die fluidische Verbindung zwischen dem Pneumatikanschluss und dem Pneumatikausgang der erfindungsgemäßen Aktivierungseinrichtung erst dann frei, nachdem das Schneidelements das Verschlusselement geöffnet hat. Dadurch wird erst nach der Öffnung des Betriebsstoffanschlusses der Betätigungsdruck zum Pneumatikausgang durchgeschaltet. Von dort wird eine weitere Aktivierungsvorrichtung eines anderen Betriebsstoffbehälters betätigt.

Vorteilhaft umfasst das Betätigungselement einen Betätigungskolben bzw. ist abschnittsweise als Betätigungskolben ausgebildet, welcher das Schneidelement trägt und mit seinem Umfang den Pneumatikausgang schaltet. Der Umfang des Betätigungskolbens überdeckt dabei während des Arbeitswegs des Betätigungskolbens den Pneumatikausgang und gibt nach dem Überfahren des Pneumatikausgangs die fluidische Verbindung zwischen dem Pneumatikausgang und dem Pneumatikanschluss der erfindungsgemäßen Aktivierungsvorrichtung frei.

Der Pneumatikausgang und der Pneumatikanschluss sind vorteilhaft in einem Pneumatikgehäuse ausgebildet, wobei der Betätigungskolben das Innere des Pneumatikgehäuses in zwei Räume teilt. Der Betätigungskolben ist dabei vorteilhaft in dem Pneumatikgehäuse geführt, wobei der Pneumatikausgang im Arbeitsweg des Betätigungskolbens liegt. Sobald der Betätigungskolben während seines Arbeitshubs den Pneumatikausgang passiert, liegen der Pneumatikausgang und der Pneumatikanschluss in demselben Raum innerhalb des Pneumatikgehäuses, sodass eine fluidische Verbindung zwischen dem Pneumatikausgang und dem Pneumatikanschluss besteht und der Betätigungsdruck auch am Pneumatikausgang anliegt.

Das Schneidelement ist vorteilhaft innerhalb eines Messergehäuses angeordnet, welches fluidisch von dem Pneumatikgehäuse getrennt ist. Eine kinematische Kopplung des Betätigungskolbens mit dem Schneidelement ist dabei durch eine Kolbenstange gegeben, welche das Schneidelement an ihrem Ende innerhalb des Messergehäuses trägt.

Durch die kinematische Kopplung bewegen sich das Schneidelement und sein Betätigungselement auf bezüglich der Länge gleichen Arbeitswegen. Das Schneidelement und der Betätigungskolben bewegen sich dabei jedoch in getrennten Räumen. Auf der Länge des jeweiligen Arbeitsweges des Schneideelements und des Betätigungselements ist dabei das Verschlusselement mit dem das Schneidelement zusammenwirkt, auf einem ersten Abschnitt des Arbeitswegs angeordnet, während der Pneumatikausgang, den das Betätigungselement beherrscht, auf einem zweiten Abschnitt liegt.
Vorzugsweise reicht die Kolbenstange durch eine Trennwand zwischen dem Pneumatikgehäuse und dem Messergehäuse, wobei die Trennwand eine Führung für die Kolbenstange umfasst. Dadurch ist eine genaue Führung des Betätigungselements und damit auch des Schneidelements am Ende der Kolbenstange an mehren axialen Führungspunkten gegeben, nämlich im Bereich des Betätigungskolbens und außerdem über die Führung der Kolbenstange. Ferner kann im Bereich der Führung der Kolbenstange auf einfache Weise eine Abdichtung, d.h. eine fluidische Trennung, zwischen dem Pneumatikgehäuse und dem Messergehäuse angeordnet werden. Die Dichtung ist vorteilhaft im Wesentlichen durch einen Dichtungsring gegeben.

Das Pneumatikgehäuse und das Messergehäuse sind in einer vorteilhaften Ausführungsform der Erfindung Abschnitte eines Gehäuses der Aktivierungseinrichtung. Das Pneumatikgehäuse und das Messergehäuse können dabei einteilig in dem Gehäuse der Aktivierungseinrichtung ausgebildet sein.

In einer bevorzugten Ausführungsform der Erfindung ist der Betriebsstoffanschluss der Aktivierungseinrichtung am Umfang des Messergehäuses angeordnet, wobei das Verschlusselement ein Verschlussstopfen mit einer ins Innere des Messergehäuses ragenden Kappe aus schnittfähigem Material ist. Das Schneidelement weist dabei eine Schneidkante auf, welche in Richtung des Kolbenhubs des Betätigungskolbens benachbart zur Innenwand des Messergehäuses wirkt. In einer vorteilhaften Ausführungsform der Erfindung ist das Schneidelement am Ende der Kolbenstange tellerförmig ausgebildet, wobei der Rand wenigstens in einem der Verschlusskappe zugeordneten Abschnitt als Messerkante ausgebildet. Das Messergehäuse ist vorteilhaft zylindrisch, bspw. mit kreisrundem Querschnitt ausgebildet, wobei das Schneidelement mit einer entsprechenden Kontur in dem Messergehäuse geführt ist.

Der Verschlussstopfen durchsetzt den Betriebsstoffanschluss der Aktivierungseinrichtung und ist mit seinem nach Außen ragenden Abschnitt an den Betriebsstoffbehälter angeschlossen. Dabei kann der freiliegende Endabschnitt des Stopfens der Verschlusskappe mit dem Betriebsstoffbehälter fest verbunden werden, bspw. eingeklebt werden.

Der Verschlussstopfen hält den Betriebsstoffanschluss der Aktivierungseinrichtung dauerhaft verschlossen, wobei im Fall der pneumatischen Betätigung der Aktivierungseinrichtung das Schneidelement die ins Innere des Messergehäuses ragende Kappe von dem Verschlussstopfen trennt und damit augenblicklich den Betriebsstoffanschluss öffnet.

In einer weiteren vorteilhaften Ausführungsform der Erfindung ist in einem Gehäuse der Aktivierungseinrichtung ein federbelasteter Fixierbolzen orthogonal zur Längsachse des Betätigungselements angeordnet und liegt an der Mantelfläche des Betätigungselements an. Dabei weist das Betätigungselement eine Rastöffnung zur Aufnahme des Fixierbolzens auf. Die Rastöffnung liegt dabei in einer Axiallage, welche der pneumatisch betätigten Aktivierungsstellung des Messerelements entspricht, d.h. in einer Axiallage, in der das Betätigungselement den Pneumatikausgang bereits passiert hat und damit der pneumatischen Betätigungsdruck zum Pneumatikanschluss durchgeschaltet ist. Der Fixierbolzen rastet in die Rastöffnung aufgrund der auf ihn wirkenden Federkraft ein, sobald der Fixierbolzen in Überdeckung mit der Rastöffnung liegt, und verhindert dadurch eine Rückwärtsbewegung des Betätigungselements und des kinematisch gekoppelten Schneidelements in einer der Öffnungsbewegung entgegen gesetzten Bewegungsrichtung. Die Rastöffnung ist vorteilhaft in der Mantelfläche der Kolbenstange angeordnet.

In einer bevorzugten Ausführungsform der erfindungsgemäßen Batterieeinheit weist der Betriebsstoffbehälter eines Kühlmittelkreises zwei Anschlüsse für Zulauf und Ablauf von Kühlmittel auf, denen jeweils eine Aktivierungseinrichtung zugeordnet ist. Dabei sind die Aktivierungseinrichtungen beider Anschlüsse pneumatisch in Reihe geschaltet, sodass der Zulauf und der Ablauf von Kühlmittel und damit die Betriebsfähigkeit des Kühlmittelkreises sichergestellt ist. Zugleich können weitere in Reihe geschaltete Betriebsstoffbehälter erst dann geöffnet werden, wenn der Kühlmittelkreis durch Betätigung beider in Reihe geschalteter Aktivierungseinrichtungen des Kühlmittelkreises geöffnet ist.

Vorteilhaft wird die Aktivierungseinrichtung des Elektrolyt enthaltenden Betriebsstoffbehälters in der Reihenschaltung hinter die zweite Aktivierungseinrichtung des Kühlmittelkreises geschaltet, sodass eine Zuführung von Elektrolyt erst möglich ist, wenn die Zirkulation des Kühlmittels gesichert ist.

Alternativ oder zusätzlich ist ein Thermostatventil zur Regelung der Temperatur der Batterie über die Kühlmittelzufuhr vorgesehen.

In einer bevorzugten Ausführungsform der Erfindung weist der Kühlmittelkreis eine in der Förderrichtung umschaltbare Kühlmittelpumpe auf und umfasst in einem Abschnitt zwei parallele, in entgegen gesetzten Richtungen durchströmbare Leitungsabschnitte, wobei in einem der parallelen Leitungsabschnitte ein Wärmetauscher angeordnet ist. Auf diese Weise kann in einer der beiden möglichen Förderrichtungen der Kühlmittelpumpe das Kühlmittel durch den Wärmetauscher geleitet werden. Durch einen Betrieb in einer entgegen gesetzten Förderrichtung der Kühlmittelpumpe wird das Kühlmittel in einem kurzen Kühlmittelkreis unter Umgehung des Wärmetauschers durch den Batteriezellenblock geführt. Mit einfachen baulichen Mitteln stehen somit für die Kühlung der Batterieeinheit praktisch zwei Kühlmittelkreise zur Verfügung, nämlich ein langer Kühlmittelkreis durch einen Wärmetauscher und ein kurzer Kühlmittelkreis unter Umgehung des Wärmetauschers. Im Betrieb des kurzen Kühlmittelkreises kann der Batteriezellenblock nach der Aktivierung der Batterieeinheit rasch auf seine Betriebstemperatur erwärmt werden.

Der Wärmetauscher ist vorteilhaft bei einer Batterieeinheit eines Torpedos an der Außenhülle des Torpedos angeordnet, wodurch ein effektiver Wärmetausch mit dem kühlen Seewasser in der Umgebung des Torpedos erfolgt.

In der Reihenschaltung der jeweiligen Aktivierungseinrichtungen einer Batterieeinheit ist vorteilhaft ein Betriebsstoffbehälter, der Elektrolyt für den Batteriezellenblock enthält, am Ende der Reihe von Betriebsstoffbehältern angeordnet. Auf diese Weise ist sichergestellt, dass Elektrolyt, bspw. eine Lauge, erst dann in den Batteriezellenblock gelangen kann, wenn alle anderen Betriebsstoffbehälter der Batterieeinheit bereits geöffnet sind und die jeweiligen Betriebsstoffe, insbesondere Kühlmittel, in dem Batteriezellenblock bereits zur Verfügung stehen. Bei der Anordnung des Betriebsstoffbehälters, der Elektrolyt für den Batteriezellenbfock enthält, am Ende der in Reihe geschalteten Betriebsstoffbehälter wird der Pneumatikausgang der Aktivierungseinrichtung dieses Betriebsstoffbehälters vorteilhaft mit einem Elektrolyt enthaltenden Innenraum des Betriebsstoffbehälters fluidisch verbunden. Dadurch schaltet das Betätigungselement der Aktivierungseinrichtung den pneumatischen Öffnungsdruck zum Innenraum des Betriebsstoffbehälters durch, sodass der pneumatische Öffnungsdruck den Elektrolyten aus dem Betriebsstoffbehälter presst und zum Batteriezellenblock leitet. Eine derartige fluidische Verbindung des Pneumatikausgangs mit dem Innenraum des Betriebsstoffbehälters am Ende einer Reihenschaltung mehrerer Aktivierungseinrichtungen kann auch bei Betriebsstoffbehältern mit anderen Betriebsstoffen als dem Elektrolyt für den Batteriezellenblock vorgesehen sein. Bspw. ist, bei mehreren separaten pneumatischen Schaltkreisen, in denen mehrere Aktivierungseinrichtungen pneumatisch in Reihe geschaltet sind, die pneumatische Anbindung des Pneumatikausgang der letzten Versschlussvorrichtung der Reihenschaltung an den Innenraum eines bisherigen Betriebsstoffbehälters in der Reihe möglich, um dessen Inhalt auszudrücken.

Weitere Merkmale der Erfindung ergeben sich aus den Unteransprüchen und aus den Ausführungsbeispielen, welche nachstehend anhand der Zeichnung näher beschreiben sind. Es zeigen:
- Fig. 1: einen Querschnitt einer Aktivierungseinrichtung in der Ruhestellung,
- Fig. 2: die Aktivierungseinrichtung gemäß Fig. 1 in der Aktivierungsstellung,
- Fig. 3: einen pneumatischen Schaltplan einer elektrischen Batterieeinheit eines Torpedos mit Aktivierungseinrichtungen gemäß Fig. 1 und Fig. 2.

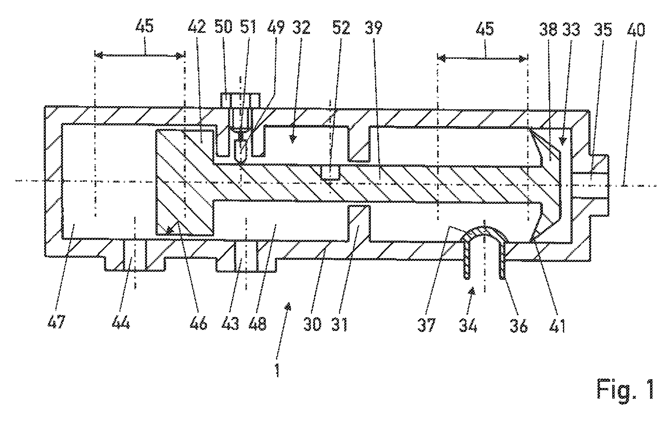

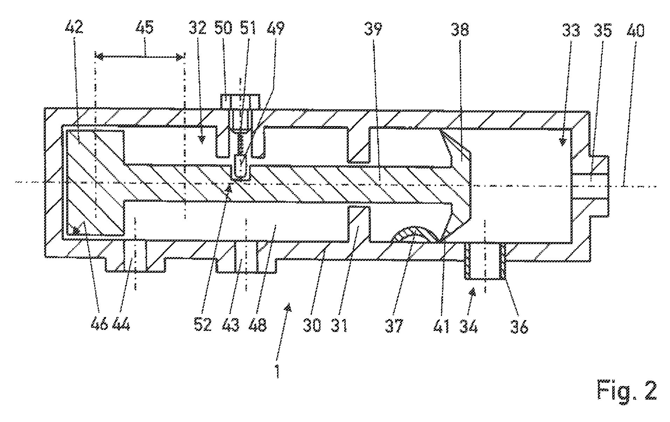

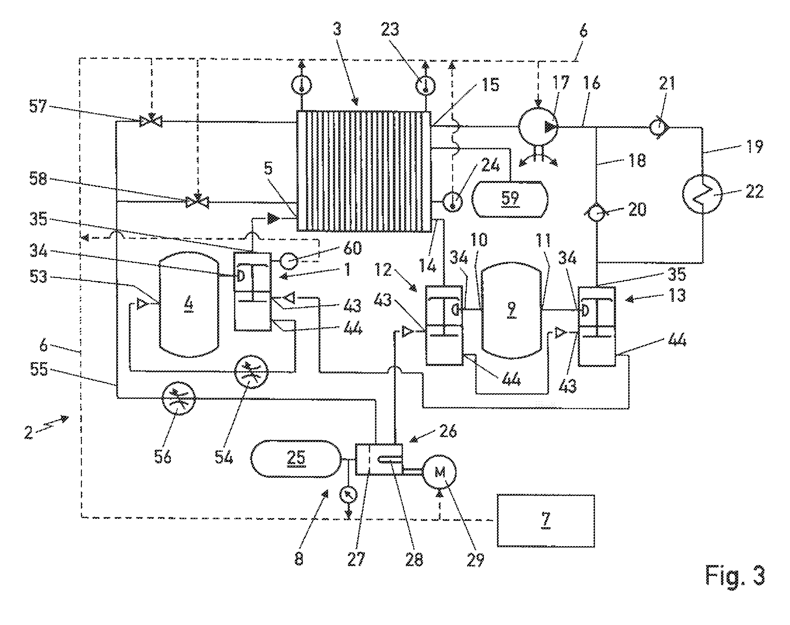

Fig. 1 und Fig. 2 zeigen jeweils Querschnitte einer Aktivierungseinrichtung 1 für eine Batterieeinheit 2 (Fig. 3). In Fig. 3 ist ein pneumatisches Schaltbild einer Batterieeinheit 2 eines Torpedos gezeigt, wobei die Batterieeinheit 2 eine Teilbatterie des Torpedos ist.

Die Batterieeinheit 2 umfasst einen Energiespeicher in Gestalt eines Batteriezellenblocks 3, welcher aus einer Vielzahl aneinandergereihter Elektrodenscheiben besteht. Die Elektroden bilden in Anwesenheit eines Elektrolyten galvanische Elemente. Der Elektrolyt, im gezeigten Ausführungsbeispiel Kalilauge, ist in einem Betriebsstoffbehälter 4 bereit gestellt, welcher durch eine Aktivierungseinheit 1 (Fig. 1, Fig. 2) verschlossen ist. Nach Betätigung der Aktivierungseinheit 1 wird der Betriebsstoffbehälter 4 mit einem Laugenanschluss 5 des Batteriezellenblocks 3 verbunden und der Batteriezellenblock 3 mit Lauge befüllt. Durch die Anwesenheit der Lauge bzw. eines anderen Elektrolyten wird der Batteriezellenblock aktiviert.

Die Batterieeinheit 2 umfasst neben dem Batteriezellenblock 3 eine Kühlung für den Batteriezellenblock 3, eine Elektronik 6 mit einer Steuereinheit 7 sowie eine pneumatische Betätigungseinrichtung 8, mit der die Aktivierungseinrichtungen der Batterieeinheit 2 pneumatisch betätigbar sind.

Die Kühlung umfasst einen Betriebsstoffbehälter 9, in dem Kühlmittel bereit gestellt ist. Zwei Anschlüsse 10, 11 des Betriebsstoffbehälters 9 sind jeweils von Aktivierungseinrichtungen 12, 13 verschlossen, welche im betätigten Zustand die Anschlüsse 10, 11 freigeben und einen Zulauf bzw. Ablauf von Kühlmittel in einem Kühlmittelkreis gewährleisten. Unter Zwischenschaltung der jeweiligen Aktivierungseinrichtung 12, 13 sind die Anschlüsse 10, 11 des mit Kühlmittel befüllten Betriebsstoffbehälters 9 mit Kühlmittelanschlüssen 14, 15 am Batteriezellenblock 3 verbunden. Es ist dadurch ein Kühlmittelkreis 16 gebildet, in dem eine Kühlmittelpumpe 17 angeordnet ist. Die Kühlmittelpumpe 17 ist bezüglich ihrer Förderrichtung umschaltbar.

Zudem umfasst der Kühlmittelkreis 16 in einem Abschnitt zwei parallele Leitungsabschnitte 18, 19, welche durch entsprechende Anordnung von Rückschlagventilen 20, 21 oder ähnlich arbeitenden fluidtechnischen Elementen in entgegen gesetzten Richtungen durchströmbar sind. Abhängig von der eingeschalteten Förderrichtung der Kühlmittelpumpe 17 wird demnach einer der beiden parallelen Leitungsabschnitte 18, 19 durchströmt. In einem der parallelen Leitungsabschnitte 19 ist dabei ein Wärmetauscher 22 angeordnet, wobei der andere Leitungsabschnitt 18 einen Bypass zum Wärmetauscher 22 bildet. Der Wärmetauscher 22 ist an der Außenhülle des Torpedos angebracht und ermöglicht eine effektive Kühlung des Kühlmittels durch Wärmetausch mit dem umgebenden Seewasser. In der Aktivierungsphase der Batterieeinheit 2 wird das Kühlmittel durch den kurzen Kühlmittelkreis, d.h. durch den Leitungsabschnitt 18 unter Umgehung des Wärmetauschers 22, geleitet und dadurch eine rasche Erwärmung der Batterieeinheit 2 gefördert. Nach Erreichen der Betriebstemperatur der Batterieeinheit 2 wird die Förderrichtung der Kühlmittelpumpe 17 umgeschaltet und das Kühlmittel fortan durch den längeren Kühlmittelkreis und den darin angeordneten Wärmetauscher 22 geleitet.

Die Kühlmittelpumpe 17 ist an die Elektronik 6 der Batterieeinheit 2 angeschlossen. Die Steuereinheit 7 erfasst über Temperaturmessfühler 23, 24 an den Kühlmittelanschlüssen 14, 15 des Batteriezellenblocks 3 die Temperatur des eintretenden Kühlmittels und die Temperatur des austretenden Kühlmittels im Rahmen eines Kühlungsmanagements. Abhängig von einer Auswertung der IstWerte der Kühlmitteltemperatur erfolgt dabei eine Steuerung der Kühlmittelpumpe 17, wobei einerseits bedarfsweise die Förderrichtung umgeschaltet wird bzw. zur Veränderung der Kühlleistung die Fördermenge verändert wird.

Die pneumatische Betätigungseinrichtung 8 für die Aktivierungseinrichtungen 1, 12, 13 umfasst einen Druckspeicher 25, der von einer Verschlussvorrichtung 26 verschlossen ist. Der Druckspeicher 25 ist eine Gasflasche, in der ein Arbeitsgas, bspw. Stickstoff, unter einem hohen Druck von bspw. über 200 bar bereit gestellt ist. Die Verschlussvorrichtung 26 umfasst ein Verschlusselement 27, welches den Druckspeicher 25 hermetisch abdichtet und mittels eines Bolzens oder Öffnungsdorns 28 geöffnet werden kann. Der Öffnungsdorn 28 wird von einem elektrischen Antriebsmotor 29 vorzugsweise über einen Spindeltrieb vorgetrieben. Das Verschlusselement 27 ist in einem bevorzugten Ausführungsbeispiel eine Membran, welche den Druckspeicher 25 hermetisch abdichtet und zur Aktivierung der Batterieeinheit 2 von dem Öffnungsdorn 28 durchstoßen wird. Zum Öffnen des Druckspeichers 25 leitet die Steuereinheit 7 dem Antriebsmotor 29 ein entsprechendes elektrisches Signal zu, sodass der Antriebsmotor 29 den Öffnungsdorn 28 durch das Verschlusselement 27 treibt und dadurch den Druckspeicher 25 öffnet.

Durch das Öffnen des Druckspeichers 25 wird das bis dahin eingeschlossene Arbeitsgas freigesetzt, um bei pneumatischen Verbrauchern zur Verfügung zu stehen, insbesondere die Aktivierungseinrichtungen 1, 12, 13 der Betriebsstoffbehälter 4, 9 pneumatisch zu betätigen. Die Aktivierungseinrichtung 1 des Elektrolyt führenden Betriebsstoffbehälters 4 und die Aktivierungseinrichtungen 12, 13 des Kühlmittel enthaltenden Betriebsstoffbehälters 9 sind konstruktiv ähnlich gestaltet. Der Aufbau und die Funktionsweise der Aktivierungseinrichtungen 1, 12, 13 ist nachstehend anhand von Fig. 1 und Fig. 2 näher erläutert.

Die Aktivierungseinheit 1 umfasst ein zylindrisches Gehäuse 30, welches durch eine Trennwand 31 in ein Pneumatikgehäuse 32 und ein Messergehäuse 33 geteilt ist. Das Messergehäuse 33 weist einen Betriebsstoffanschluss 34 auf, welcher in Einbaulage der Aktivierungseinrichtung 1 mit einem Fluidanschluss eines Betriebsstoffbehälters verbunden ist. In dem Ausführungsbeispiel gemäß Fig. 3 ist der Betriebsstoffanschluss 34 der Aktivierungseinheit 1 für den Elektrolyt enthaltenden Betriebsstoffbehälter 4 mit dessen Fluidanschluss verbunden. Die Betriebsstoffanschlüsse 34 der Aktivierungseinheiten 12, 13 des Kühlmittelführenden Betriebsstoffbehälters 9 sind in entsprechender Weise mit den Anschlüssen 10, 11 dieses Betriebsstoffbehälters 9 verbunden.

An der Stirnseite des Messergehäuses 33 ist ein Betriebsstoffauslass 35 ausgebildet, durch den Betriebsstoff nach der Öffnung des Betriebsstoffbehälters abgeführt wird.

In der in Fig. 1 gezeigten Ruhestellung der Aktivierungseinrichtung 1 ist der Betriebsmittelanschluss 34 mit einem Verschlussstopfen 36 verschlossen, welcher mit einer Kappe 37 ins Innere des Messergehäuses 33 ragt. Der Verschlussstopfen 36 ist durch den Betriebsstoffanschluss 34 geschoben und wird außerhalb des Gehäuses 30 der Aktivierungseinrichtung 1 mit einer dichten Fluidleitung zum jeweiligen Betriebsstoffbehälter verbunden oder direkt an den Betriebsstoffbehälter angeschlossen. In weiteren, nicht gezeigten Ausführungsbeispielen ist der Betriebsstoffanschluss 34 durch eine druckdichte Schraubverbindung wie bspw. eine Muffe, mit dem Fluidanschluss des Betriebsstoffbehälters verbunden.

In dem Messergehäuse 33 ist ein Schneidelement 38 am Ende einer Kolbenstange 39 angeordnet und ist über die Kolbenstange 39 in Richtung der Längsachse 40 der Aktivierungseinrichtung 1 bewegbar. Das Schneidelement 38 ist tellerförmig ausgebildet und orthogonal zur Kolbenstange 39 ausgerichtet, sodass ein Messer 41 am Umfang des Schneidelements 38 nahe der Innenwand des Messergehäuses 33 bewegbar ist. Beim Passieren des Verschlussstopfens 36 trennt das Messer 41 die Kappe 37 des Verschlussstopfens 36, sodass der Betriebsstoffanschluss 34 freigegeben ist.

Ein Betätigungselement zur Betätigung des Schneidelements 38 umfasst neben der Kolbenstange 39 einen Betätigungskolben 42, welcher in dem Pneumatikgehäuse 32 längs geführt ist. Das Pneumatikgehäuse 32 weist einen Pneumatikanschluss 43 auf, welcher an den Druckspeicher 25 (Fig.3) angeschlossen ist. Sobald der Druckspeicher zur Aktivierung der Batterieeinheit geöffnet ist, wirkt der Arbeitsdruck aus dem Druckspeicher auf den Betätigungskolben 42, welcher vom dem Arbeitsdruck verdrängt wird. Die Aktivierungseinrichtung 1 umfasst ferner einen Pneumatikausgang 44, welcher in Abhängigkeit von der Stellung des Betätigungskolbens 42 mit dem Pneumatikanschluss 43 fluidisch verbindbar ist. Hierzu sind der Pneumatikanschluss 43 und der Pneumatikausgang 44 in unterschiedlichen Axiallagen im Pneumatikgehäuse 32 angeordnet, wobei der Betätigungskolben 42 in der in Fig. 1 gezeigten Ausgangslage zwischen dem Pneumatikanschluss 43 und dem Pneumatikausgang 44 liegt. Der Pneumatikausgang 44 liegt dabei innerhalb des Arbeitswegs 45 des Betätigungskolbens, sodass der Betätigungskolben 42 den Pneumatikausgang 44 mit seinem Umfang 46 steuert.

In der in Fig. 1 gezeigten Ruhestellung trennt der Betätigungskolben 42 innerhalb des Pneumatikgehäuses 32 einen Abschnitt 47 mit dem Pneumatikausgang 44 von einem Druckraum 48 ab, in den der Pneumatikanschluss 43 mündet und welcher daher nach der Öffnung des Druckspeichers unter den Arbeitsdruck des Druckspeichers gesetzt ist. Passiert der Betätigungskolben 42 auf seinem Arbeitsweg 45 den Pneumatikausgang 44, so erfasst der Druckraum 48 auch den Pneumatikausgang 44. In dieser, in Fig. 2 gezeigten Aktivierungsstellung, werden der Pneumatikanschluss 43 und der Pneumatikausgang 44 über den gemeinsamen Druckraum 48 fluidisch miteinander verbunden, sodass der Arbeitsdruck vom Pneumatikanschluss 43 zum Pneumatikausgang 44 durchgeschaltet wird.

Die Bewegung des Betätigungskolbens 42 wird über die Kolbenstange 39 auf das Schneidelement 38 am Ende der Kolbenstange 39 übertragen. Mit anderen Worten wird das Schneidelement 33 durch die kinematische Kopplung mit dem Betätigungskolben 42 mit demselben Arbeitsweg 45 bewegt. In dem Arbeitsweg 45 des Schneidelements 38 ist der Verschlussstopfen 36 angeordnet, welcher den Betriebsstoffanschluss 34 beherrscht. Dabei liegen der Verschlussstopfen 36 und der Pneumatikausgang mit dem Schneidelement 38 und dem kinematisch mit dem Schneidelement 38 gekoppelten Betätigungselement in einer derartigen Konfiguration, dass auf dem Arbeitsweg 45 zunächst das Schneidelement 38 den Verschlussstopfen 36 und anschließend der Betätigungskolben 42 den Pneumatikausgang 44 überfährt.

Getrieben vom Arbeitsdruck im Druckraum 48 zieht der Betätigungskolben 42 das Schneidelement 33 über den Verschlussstopfen 36, wobei das Messer 41 am Umfang des Schneidelements 38 die Kappe 37 des Verschlussstopfens 36 abtrennt. Die abgetrennte Kappe 37 wird von dem radialen Schneidelement 38 abseits des geöffneten Betriebsstoffanschlusses 34 in dem Messergehäuse 33 eingeschlossen, sodass zufälliges Verstopfen des Betriebsstoffanschlusses 34 durch das abgetrennte Kappenfragment ausgeschlossen ist.

Die Trennwand 31 bildet neben der Trennung des Pneumatikgehäuses 32 von dem Messergehäuse 33 eine Führung der Kolbenstange 39 aus. Zusätzlich ist eine Führung der aus Betätigungselement und Schneidelement gebildeten Baugruppe über das radiale Schneidelement 38 gegeben, welches bis Nahe der Innenwand des Messergehäuses 33 reicht.

Die Aktivierungseinrichtung 1 wird von einem Feder belasten Fixierbolzen 49 in der Aktivierungsstellung gemäß Fig. 2 gehalten. Der Fixierbolzen 49 ist im Gehäuse 30 der Aktivierungseinrichtung 1 orthogonal zur Längsachse 40 angeordnet und liegt an der Mantelfläche des Betätigungselements an. Im gezeigten Ausführungsbeispiel ist der Fixierbolzen 49 mittels einer Schraube 50 und einer Schraubenfeder 51 an der Mantelfläche der Kolbenstange 39 gehalten. In der Kolbenstange 39 in eine Rastöffnung 52 ausgespart, welche mit der Kolbenstange 39 bewegt wird. Sobald die Rastöffnung 52 während der Arbeitsbewegung des Betätigungselements, d.h. insbesondere der Kolbenstange 39, auf der axialen Höhe des Fixierbolzens 49 angekommen ist, drängt die Schraubenfeder 51 den Fixierbolzen 49 in die Rastöffnung 52. Der eingerastete Fixierbolzen 49 sichert das Schneidelement 38 in der Aktivierungsstellung gemäß Fig. 2, sodass eine unerwünschte Rückkehr des Schneidelements 38 in den Bereich des öffneten Betriebsstoffanschlusses 34 ausgeschlossen ist.

In der pneumatischen Schaltung der Batterieeinheit 2 gemäß Fig. 3 sind die Aktivierungseinheiten 1, 12, 13 der Betriebsstoffbehälter 4, 9 in einer Reihenschaltung geschaltet. Dabei ist in der Reihe der Aktivierungseinrichtungen 1, 12, 13 zunächst der Pneumatikanschluss 43 einer ersten, der Kühlung zugeordneten, Aktivierungseinrichtung 12 direkt an den Druckspeicher 25 bzw. dessen Verschlussvorrichtung 26 angeschlossen. Der Pneumatikausgang 44 dieser ersten Aktivierungseinrichtung 12 ist mit dem Pneumatikanschluss 43 der zweiten Aktivierungseinrichtung 13 der Kühlung verbunden. Der Pneumatikausgang 44 der zweiten Aktivierungseinrichtung 13 der Kühlung ist mit dem Pneumatikanschluss 43 der Aktivierungseinrichtung 1 des Batterielauge enthaltenden Betriebsmittelbehälters 4 verbunden. Auf diese Weise wird sichergestellt, dass der Arbeitsdruck zum Öffnen des Betriebsmittelbehälters 4 erst dann durchgeschaltet wird und die Batterielauge freigesetzt wird, wenn in der Reihenschaltung die Anschlüsse 10, 11 des Kühlmittelbehälters 9 bereits geöffnet sind und das Kühlmittel zirkulieren kann. Die Aktivierungseinrichtungen 12, 13 mit dem zuvor anhand von Fig. 1 und 2 erläuterten Aufbau gewährleisten dabei durch die kinematische Kopplung von pneumatischem Betätigungselement und Schneidelement, dass erst nach einem vollständigen Öffnen beider Aktivierungseinrichtungen 12, 13 des Kühlmittelbehälters der Arbeitsdruck zum pneumatischen Öffnen des Batterielauge enthaltenden Betriebsmittelbehälters 4 durchgeschaltet wird.

Der Pneumatikausgang 44 der Aktivierungseinrichtung 1 des Batterielauge enthaltenden Betriebsstoffbehälters 4 ist am Ende der Reihenschaltung der Aktivierungseinrichtungen 1, 12, 13 angeordnet, sodass Batterielauge erst dann zum Batteriezellenblock 3 gelangen kann, wenn sämtliche weiteren in der Reihenschaltung angeordneten Betriebsstoffbehälter geöffnet sind. Der Pneumatikausgang 44 der Aktivierungseinrichtung 1 dieses Betriebsstoffbehälters 4 mit Batterielauge ist mit einem Behälteranschluss 53 des Betriebsstoffbehälters 4 und dadurch mit dem Innenraum des Betriebsstoffbehälters 4 verbunden. In der Leitung zwischen dem Pneumatikausgang 44 und dem Behälteranschluss 53 ist ein Druckminderer 54 angeordnet, welcher den Arbeitsdruck des Druckspeichers 25 auf ein zum Auspressen der Batterielauge aus dem Betriebsstoffbehälter 4 vorteilhaftes Maß von bspw. 5 bar senkt. Sobald die Aktivierungseinheit 1 ihren Betriebsstoffanschluss 34 öffnet und damit über den Pneumatikausgang 44 den Behälteranschluss 53 beaufschlagt, wird die Batterielauge aus dem Betriebsstoffbehälter 4 über den Betriebsstoffauslass 35 der Aktivierungseinrichtung 1 in den Batteriezellenblock 5 gepresst.

Um eine rasche Befüllung des Batteriezellenblocks 3 mit Batterielauge zu ermöglichen, ist eine zentrale Laugenzuführung vorgesehen, welche mittels Sperrschläuchen nach dem Befüllen der einzelnen Batteriezellen abgetrennt werden. Die Sperrschläuche und eine den Sperrschläuchen zugeordnete Abstandsstange bestehen aus einem elektrisch isolierenden Material, insbesondere Gummi. Durch das elektrisch isolierende Material wird eine unerwünschte Erwärmung verhindert, die zu einem Batteriebrand führen könnte.

Dabei werden die Sperrschläuche mit Arbeitsgas aus dem Druckspeicher 25 aufgeblasen und dadurch die einzelnen Batteriezellen isoliert. Eine Druckluftleitung 55 zur Versorgung der Sperrschläuche ist über einen Druckminderer 56 an den Druckspeicher 25 angeschlossen. Die Durchschaltung der Druckluft zu den Sperrschläuchen wird über selbstentlüftende Sperrventile 57, 58 sichergestellt, welche von der Steuereinheit 7 über die Batterieelektronik 6 ansteuerbar sind. Der Druckminderer 56 in der Druckluftleitung 55 zu den Sperrschläuchen ist auf einen größeren Arbeitsdruck als dem Laugendruck entsprechend dem Druckminderer 54 vor dem Betriebsstoffbehälter 4 eingestellt, bspw. auf 7 bar. Dadurch ist sichergestellt, dass die Sperrschläuche entgegen dem Laugendruck aufgeblasen werden können.

Die Druckluftleitung 55 zur Versorgung der Sperrschläuche ist derart mit dem Pneumatikstrang, welcher die in Reihe geschalteten Aktivierungseinheiten 1, 1', 1" umfasst, abgestimmt, dass das Aufblasen der Sperrschläuche vor der pneumatischen Betätigung der Aktivierungseinrichtungen erfolgt. Die Abstimmung des zeitlichen Ablaufs der Versorgung der Sperrschläuche und der Betätigung der Aktivierungseinheiten 1, 1', 1" (unterschiedliche Laufzeiten) stellt dabei sicher, dass die Sperrschläuche aufgeblasen sind, bevor Batterielauge in die Batteriezellen eingepresst wird. Auf diese Weise ist eine kontrollierte Laugenbefüllung gewährleistet und im Fehlerfall das unkontrollierte Einfließen von Batterielauge in die Batterieeinheit verhindert.

Zum Auffangen überschüssig zugeführter Batterielauge ist an den Batteriezellenblock 3 ein Auffangbehälter 59 angeschlossen.

Der Aktivierungseinrichtung 1 des Betriebsstoffbehälters 4 mit der Batterielauge ist ein Lecksensor 60 zugeordnet, welcher das Eindringen von Lauge - bspw. im Fall von Undichtigkeiten des Verschlussstopfens - detektiert und über die Batterieelektronik 6 der Steuereinheit 7 signalisiert. Während einer Lagerung der Batterieeinheit 2 und der Aktivierungseinrichtungen 1 kann durch den Lecksensor 60 rechtzeitig eine Undichtigkeit erkannt werden.

## Patentansprüche

1. Aktivierungseinrichtung für eine elektrische Batterieeinheit (2) mit einem Betriebsstoffanschluss (34), an den ein Betriebsstoffbehälter (2) anschließbar ist, mit einem beweglich angeordneten Schneidelement (38), welches über einen Pneumatikanschluss (43) der Aktivierungseinrichtung (1, 12, 13) mittels eines Betätigungselements pneumatisch betätigbar ist, und mit einem im Arbeitsweg des Schneidelements (38) angeordneten Verschlusselement (36), welches den Betriebsstoffanschluss (34) beherrscht,
wobei
die Aktivierungseinrichtung (1, 12, 13) einen Pneumatikausgang (44) umfasst, welcher in Abhängigkeit von der Stellung des Betätigungselements (42) mit dem Pneumatikanschluss (43) fluidisch verbindbar ist, **gekennzeichnet durch**
eine derartige Konfiguration der Anordnung von Betätigungselement und Pneumatikausgang (44), dass der Pneumatikausgang (44) in einer Stellung des Betätigungselements , welche im Arbeitsweg des Schneidelements (38) nach dem Passieren des Verschlusselements (36) liegt, mit dem Pneumatikanschluss (43) fluidisch verbunden ist.

2. Aktivierungseinrichtung nach Anspruch 1,
**dadurch gekennzeichnet, dass**
das Betätigungselement einen Betätigungskolben (42) umfasst, welcher das Schneidelement (38) trägt und auf seinem Arbeitsweg (45) mit seinem Umfang den Pneumatikausgang (44) schaltet.

3. Aktivierungseinrichtung nach Anspruch 2,
**dadurch gekennzeichnet, dass**
der Betätigungskolben (42) in einem Pneumatikgehäuse (32) geführt ist, welches den Pneumatikanschluss (43) und den Pneumatikausgang (44) aufweist, wobei der Pneumatikausgang (44) im Arbeitsweg des Betätigungskolbens (42) liegt.

4. Aktivierungseinrichtung nach Anspruch 2 oder 3,
**dadurch gekennzeichnet, dass**
das Schneidelement (38) am Ende einer mit dem Betätigungskolben (42) verbundenen Kolbenstange (39) innerhalb eines Messergehäuses (33) angeordnet ist.

5. Aktivierungseinrichtung nach Anspruch 4,
**dadurch gekennzeichnet, dass**
die Kolbenstange (39) durch eine Trennwand (31) zwischen dem Pneumatikgehäuse (32) und dem Messergehäuse (33) reicht, wobei die Trennwand (31) eine Führung für die Kolbenstange (39) umfasst.

6. Aktivierungseinrichtung nach Anspruch 4 oder 5,
**dadurch gekennzeichnet, dass**
der Betriebsstoffanschluss (34) am Umfang des Messergehäuses (33) angeordnet ist und das Verschlusselement als Verschlussstopfen (36) mit einer ins Innere des Messergehäuses (33) ragenden Kappe (37) aus schnittfähigem Material ausgebildet ist.

7. Aktivierungseinrichtung nach einem der Ansprüche 4 bis 6,
**dadurch gekennzeichnet, dass**
in einem Gehäuse (30) der Aktivierungseinrichtung (1, 12, 13) ein federbelasteter Fixierbolzen (49) orthogonal zur Längsachse des Betätigungselements angeordnet ist und an die Mantelfläche des Betätigungselements anliegt, wobei das Betätigungselement in der seiner Mantelfläche eine Rastöffnung (52) zur Aufnahme des Fixierbolzens (59) in einer Axiallage aufweist, welche eine pneumatisch betätigten Aktivierungsstellung des Schneidelements (38) entspricht.

8. Batterieeinheit mit einem Batteriezellen-block (3) und mehreren an den Batteriezellenblock (3) angeschlossenen Betriebsstoffbehältern (4, 9), sowie den Betriebsstoffbehältern (4, 9) zugeordneten Aktivierungseinrichtungen (1, 12, 13) nach einem der vorhergehenden Ansprüche, wobei die Aktivierungseinrichtungen (1, 12, 13) über einen Druckspeicher (25) der Batterieeinheit (2), dem eine betätigbare Verschlussvorrichtung (26) zugeordnet ist, pneumatisch betätigbar sind,
**dadurch gekennzeichnet, dass**
die Aktivierungseinrichtungen (1, 12, 13) der Betriebsstoffbehälter (4, 9) pneumatisch in einer Reihenschaltung geschaltet sind.

9. Batterieeinheit nach Anspruch 8,
**dadurch gekennzeichnet, dass**
in der Reihenschaltung der jeweiligen Aktivierungseinrichtungen (1, 12, 13) ein Betriebsstoffbehälter (4), welcher Elektrolyt für den Batteriezellenblock (3) enthält, hinter einem Betriebsstoffbehälter (9) eines Kühlmittelkreises (16) der Batterieeinheit (2) angeordnet ist.

10. Batterieeinheit nach Anspruch 9,
**dadurch gekennzeichnet, dass**
der Betriebsstoffbehälter (9) des Kühlmittelkreises (16) zwei Anschlüsse (10, 11) für Zulauf und Ablauf von Kühlmittel aufweist, den jeweils eine Aktivierungseinrichtung (12, 13) zugeordnet ist, wobei die Aktivierungseinrichtungen (12, 13) beider Anschlüsse (10, 11) pneumatisch in Reihe geschaltet sind.

11. Batterieeinheit nach Anspruch 9 oder 10,
**dadurch gekennzeichnet, dass**
der Kühlmittelkreis 16 eine in der Förderrichtung umschaltbare Kühlmittelpumpe (17) und in einem Abschnitt zwei parallele, in entgegen gesetzten Richtungen durchströmbare Leitungsabschnitte (18, 19) umfasst, wobei in einem der parallelen Leitungsabschnitte (18, 19) ein Wärmetauscher (22) angeordnet ist.

12. Batterieeinheit nach einem der Ansprüche 8 bis 11,
**dadurch gekennzeichnet, dass**
in der Reihenschaltung der jeweiligen Aktivierungseinrichtungen (1, 12, 13) ein Betriebsstoffbehälter (4), welcher Elektrolyt für den Batteriezellenblock (3) enthält, am Ende der Reihe der jeweiligen Aktivierungseinrichtungen (1, 12, 13) angeordnet ist.

13. Batterieeinheit nach Anspruch 12,
**dadurch gekennzeichnet, dass**
der Pneumatikausgang (44) der Aktivierungseinrichtung (1) des Betriebsstoffbehälters (4), welcher Elektrolyt für den Batteriezellenblock (3) enthält, mit einem Innenraum des Betriebsstoffbehälters (4) fluidisch verbunden ist.

## Claims

1. Activation device for an electrical battery unit (2) with a connection (34) for fuel to which a fuel container (2) can be connected, with a movably arranged cutting element (38) which can be pneumatically activated via a pneumatic connection (43) of the activation device (1, 12, 13) by an activation element, and with a closure element (36) which is arranged in the work path of the cutting element (38) and which controls the fuel connection (34),
wherein
the activation device (1, 12, 13) comprises a pneumatic output (44) which can be fluidically connected as a function of the position of the activation element (42) to the pneumatic connection (43),
**characterized by that**
such a configuration of the arrangement of activation element and pneumatic output (44) that the pneumatic output (44) is fluidically connected to the pneumatic connection (43) in a position of the activation element which lies in the work path of the cutting element (38) after having passed the closure element (36).

2. Activation device according to Claim 1,
**characterized by that**
the activation element comprises an activation piston (42) which carries the cutting element (38) and switches the pneumatic output (44) on its work path (45) with its circumference.

3. Activation device according to Claim 2,
**characterized by that**
the activation piston (42) is guided in a pneumatic housing (32) which comprises the pneumatic connection (43) and the pneumatic output (44), wherein the pneumatic output (44) lies in the work path of the activation piston (42).

4. Activation device according to Claim 2 or 3,
**characterized by that**
the cutting element (38) is arranged on the end of a piston rod (39) connected to the activation piston (42) and inside a measuring device housing (33).

5. Activation device according to Claim 4,
**characterized by that**
the piston rod (39) extends through a dividing wall (31) between the pneumatic housing (32) in the measuring device housing (33), wherein the dividing wall (31) comprises a guide for the piston rod (39).

6. Activation device according to Claim 4 or 5,
**characterized by that**
the fuel connection (34) is arranged on the circumference of the measuring device housing (33) and that the closure element is constructed as a closure plug (36) with a cap (37) of material that can be cut and which extends into the interior of the measuring device housing (33).

7. Activation device according to one of claims 4 to 6,
**characterized by that**
a spring-loaded fixing bolt (49) is arranged orthogonally to the longitudinal axis of the activation element in a housing (30) of the activation device (1, 12, 13) and rests on the jacket surface of the activation element, wherein the activation element comprises a catch opening (52) in its jacket surface for receiving the fixing bolt (59) in an axial position corresponding to a pneumatically activated activation position of the cutting element (38).

8. Battery unit with a battery cell block (3) and with several fuel containers (4, 9) connected to the battery cell block (3), and with activation devices (1, 12, 13) associated with the fuel containers (4, 9) according to one of the previous claims, wherein the activation devices (1, 12, 13) can be pneumatically activated via a pressure reservoir (25) of the battery unit (2) which is associated with an actuatable closure device (26),
**characterized by that**
the activation devices (1, 12, 13) of the fuel containers (4, 9) are pneumatically connected in a series circuit.

9. Battery unit according to Claim 8,
**characterized by that**
a fuel container (4) containing electrolyte for the battery cell block (3) is arranged in the series circuit of the particular activation devices (1, 12, 13) behind a fuel container (9) of a cooling agent circuit (16) of the battery unit (2).

10. Battery unit according to Claim 9,
**characterized by that**
the fuel container (9) of the cooling agent circuit (16) comprises two connections (10, 11) for the infeed and runoff of cooling agent to each of which an activation device (12, 13) is associated, wherein the activation devices (12, 13) of both connections (10, 11) are pneumatically connected in series.

11. Battery unit according to Claim 9 or 10,
**characterized by that**
the cooling agent circuit (16) comprises a cooling agent pump (17) which can be reversed in the direction of delivery and comprises in one section two parallel line sections (18, 19) which can be flowed through in opposite directions, wherein a heat exchanger (22) is arranged in one of the parallel line sections (18, 19).

12. Battery unit according to one of Claims 8 to 11,
**characterized by that**
in the series circuit of the particular activation devices (1, 12, 13), a fuel container (4) containing electrolyte for the battery cell block (3) is arranged on the end of the series of the particular activation devices (1, 12, 13).

13. Battery unit according to Claim 12,
**characterized by that**
the pneumatic output (44) of the activation device (1) of the fuel container (4), which contains electrolyte for the battery cell block (3), is fluidically connected to an inner chamber of the fuel container (4).

## Revendications

1. Dispositif d'activation pour une unité de batterie électrique (2) muni d'un raccord de fluide actif (34) auquel il est possible de raccorder une cuve de fluide actif (4), d'un élément coupant (38) mobile qu'il est possible d'actionner de manière pneumatique grâce à un raccord pneumatique (43) du dispositif d'activation (1, 12, 13) via un élément d'actionnement, et d'un élément de fermeture (36) disposé dans la course utile de l'élément coupant (38) et qui régit le raccord de fluide actif (34),
le dispositif d'activation (1, 12, 13) comprenant une sortie pneumatique (44) qu'il est possible de relier fluidiquement au raccord pneumatique (43) en fonction de la position de l'élément d'actionnement (42),
**caractérisé par**
une configuration de l'agencement entre l'élément d'actionnement et la sortie pneumatique (44) telle que la sortie pneumatique (44) est reliée fluidiquement au raccord pneumatique (43) dans une position de l'élément d'actionnement atteinte après le dépassement de l'élément de fermeture (36) dans la course utile de l'élément coupant (38).

2. Dispositif d'activation selon la revendication 1,
**caractérisé en ce que**
l'élément d'actionnement comprend un piston d'actionnement (42) qui porte l'élément coupant (38) et dont le pourtour raccorde la sortie pneumatique (44) lorsqu'il parcourt sa course utile (45).

3. Dispositif d'activation selon la revendication 2,
**caractérisé en ce que**
le piston d'actionnement (42) passe dans une enceinte pneumatique (32) comportant le raccord pneumatique (43) et la sortie pneumatique (44), la sortie pneumatique (44) étant disposée dans la course utile du piston d'actionnement (42).

4. Dispositif d'activation selon la revendication 2 ou 3,
**caractérisé en ce que**
l'élément coupant (38) est disposé à l'extrémité d'une tige de piston (39) reliée au piston d'actionnement (42) dans une enceinte de coupe (33).

5. Dispositif d'activation selon la revendication 4,
**caractérisé en ce que**
la tige de piston (39) traverse une paroi séparatrice (31) entre l'enceinte pneumatique (32) et l'enceinte de coupe (33), la paroi séparatrice (31) comprenant un passage pour la tige de piston (39).

6. Dispositif d'activation selon la revendication 4 ou 5,
**caractérisé en ce que**
le raccord de fluide actif (34) est disposé à la périphérie de l'enceinte de coupe (33) et l'élément de fermeture est un bouchon (36) comportant un capuchon (37) en matériau susceptible d'être coupé qui dépasse à l'intérieur de l'enceinte de coupe (33).

7. Dispositif d'activation selon l'une des revendications 4 à 6,
**caractérisé par**
un boulon de fixation (49) à ressort disposé dans une enceinte (30) du dispositif d'activation (1, 12, 13), perpendiculairement à l'axe longitudinal de l'élément d'actionnement et en appui sur la surface extérieure de ce dernier, ladite surface extérieure de l'élément d'actionnement présentant un évidement d'encliquetage (52), destiné à recevoir le boulon de fixation (49), dans une position axiale correspondant à un état pneumatiquement activé de l'élément coupant (38).

8. Unité de batterie comportant un bloc de cellules de batterie (3) et plusieurs cuves de fluide actif (4, 9) raccordées audit bloc de cellules de batterie (3), ainsi que des dispositifs d'activation (1, 12, 13) selon l'une des revendications précédentes, qui sont affectés à ces cuves de fluide actif (4, 9), lesdits dispositifs d'activation (1, 12, 13) pouvant être actionnés pneumatiquement par un accumulateur de pression (25) de l'unité de batterie (2) associé à un dispositif de fermeture (26) actionnable,
**caractérisée en ce que**
les dispositifs d'activation (1, 12, 13) des cuves de fluide actif (4, 9) sont disposés pneumatiquement en série.

9. Unité de batterie selon la revendication 8,
**caractérisée en ce que,**
dans la disposition en série des dispositifs d'activation (1, 12, 13), une cuve de fluide actif (4), qui contient de l'électrolyte pour le bloc de cellules de batterie (3), est disposée en aval d'une cuve de fluide actif (9) d'un circuit de refroidissement (16) de l'unité de batterie (2).

10. Unité de batterie selon la revendication 9,
**caractérisée en ce que**
la cuve de fluide actif (9) du circuit de refroidissement (16) présente deux raccords (10, 11) pour l'entrée et la sortie du réfrigérant, chacun étant associé à un dispositif d'activation (12, 13), les dispositifs d'activation (12, 13) des deux raccords (10, 11) étant disposés pneumatiquement en série.

11. Unité de batterie selon la revendication 9 ou 10,
**caractérisée en ce que**
le circuit de refroidissement (16) comprend une pompe de refroidissement (17) dont le sens de refoulement est inversable et un segment divisé en deux segments de conduite (18, 19) parallèles et parcourus en sens opposés, un échangeur de chaleur (22) étant disposé dans l'un desdits deux segments de conduite (18, 19).

12. Unité de batterie selon l'une des revendications 8 à 11,
**caractérisée en ce que,**
dans la disposition en série des dispositifs d'activation (1, 12, 13), une cuve de fluide actif (4), qui contient de l'électrolyte pour le bloc de cellules de batterie (3), est disposée en aval de tous les dispositifs d'activation (1, 12, 13).

13. Unité de batterie selon la revendication 12,
**caractérisée en ce que**
la sortie pneumatique (44) du dispositif d'activation (1) de la cuve de fluide actif (4), qui contient de l'électrolyte pour le bloc de cellules de batterie (3), est reliée fluidiquement à un espace intérieur de la cuve de fluide actif (4).
